# EUROPEAN PATENT APPLICATION

(11) **EP 1 049 232 A2**
(43) Date of publication of application: **02.11.2000**
(21) Application number: 00109212.1
(22) Date of filing: 28.04.2000
(51) Int. Cl.: H02J 7/35

(54) **Solar battery system**

(30) Priority: 30.04.1999 JP 12475199
(71) Applicant: Haneda Humepipe Co., Ltd., Tokyo (JP)
(72) Inventor: Fujii, Takashi, c/o Haneda Humepipe Co., Ltd., Tokyo (JP); Namioka, Hironori, c/o Haneda Humepipe Co., Ltd., Tokyo (JP)
(74) Representative: Patentanwälte Westphal, Mussgnug & Partner

(57) **Abstract**

It is one object of the present invention to provide a solar battery system which has long-term data on charge and discharge stored into a memory so that the solar battery system has the function of the assurance on the operation and realibility-maintaining. In the structure of the system, the output of a solar battery 2 is charged with electricity, through a charge control means 3a, into a storage battery 2, wherein charging volume of the storage battery 4 is detected by a charge quantity detecting means 3b. Further, a discharge quantity of the storage battery 4 is detected by a discharge quantity 3c. The detected analog signal is sent through an external interface means 3d to an operation and decision means 3e. A microcomputor of the operation and decision means 3e controls whole discharge quantity control device 3, wherein the detected signal and others are processed together with appropriate various command signal of a storage means 3f in accordance with a load or loads 5 and outputted to a discharge control means 3i. Further, data on the present command signal of sorts of control elements sent and data including the result of past control are stored in order of time into the storage means 3f. the control signal for controlling the output discharge quantity into a load or loads 5 controls the next discharge output means 3k in accordance with charge quantity of the discharge control means 3i, and the next discharge output means 3k supplies the needed electric power to a load or loads 5.

## Description

### CROSS-REFERENCE TO RELATED APPLICATION

This invention claims right of priority of foreign patent application on Japanese patent application No. 124,751 of 1999 (Heisei 11), filed on the 30th, April of 1999, based on 35 USC, section 119.

### BACKGROUND OF THE INVENTION

### Field of the Invention

The present invention relates to a solar battery system in which electric energy outputted from a solar battery is charged and stored into a storage battery and the stored electric energy is supplied to a load or lods.

### Description of Related Art

In a conventional solar battery system, a solar battery is installed at an angle of 45° to the surface of land at a sunny place facing south, wherein it is general that the solar battery system comprises a storage battery, the output of the solar battery of the average of the duration of sunshine per one day obtained from meteorological observation data in Japan, about three hours is charged and stored into the storage battery and the stored electric energy is used as power source.

In this system, since in case of rainy weather or cloudy weather, the output of a solar battery is weak so that enough charging into a storage battery is impossible, this system cannot be used in case of rainy weather or cloudy weather. Therefore, a case where this power source system does not work well as the power source system used every day happens. Therefore, in order to compensate the bad condition in which weather is unsunny, wherein this compensation is referred to as "unsunniness compensation", it is done that the capacity of a storage battery is made larger, and in rainy weather or cloudy weather, stored electric energy is used as power source.

In this case, if days of the unsunniness compensation are 5 to 30 days, the capacity of the storage battery is needed to be 5 to 30 times of the needed electric power per one day. Namely, in this case, even if days of rainy weather and cloudy weather are continuous for 5 to 30 days, the needed electric power can be supplied to a load or loads every day.

This system has been used as a basic type of the above-mentioned solar battery system for a long time. However, as the effective use of the solar battery system at a place where power source does not exist is promoted, conditions which limit a use of solar battery system becomes severe, since there are basic problems that the limited condition on the installation of solar battery in which a solar battery must be set at a sunny place and at an angle of 45° to the surface of lands and facing the south exists, that a place of solar battery must be selected because a solar battery does not work in the shade, that the installation of a solar battery mars a spectacle and that the charge and discharge operation trouble is caused by snow lying on the surface on the surface of a solar battery, which problems are developing into main causes of hindrance to diffusion of the solar battery system.

That a solar battery system is convenient, and usable safely is the important conditions of design, for the diffusion and spread of the solar battery system. However, speaking of conditions of design, it goes without saying that a new solar battery system is desired to be developed in which the charge and discharge operation is assured even in case of a solar battery being put in the shade in rainy weather and cloudy weather, and conditions on the installation of solar battery outside does not matter, and which is characterized by the installation of solar battery perpendicular to the surface of land which is favorable to snow.

Accordingly, a solar battery system is disclosed, for example, in Japanese patent laying-open No. 177683 of 1995 (Heisei 7) which includes combination of an electric double layer condenser as a storage battery and a large capacity solar battery which outputs a given output even under weak solar light in the shade in rainy weather and others. The solar battery system can be used for a long time even if chargings are repeated every day regardless of weather, since the number of times of cycle of charge and discharge of electric double layer condenser above 100 thousands are secured. Further, since charging is secured even in the shade in rainy weather, a place of the installation of the solar battery does not matter, and capacity of the storage battery of one day may be enough, since the nonsunniness compensation is unneeded, by which a solar battery system of small size and low price is made possible so that a useful solar battery system can be actualized.

However, the ratio of output of a solar battery system of a case where the solar battery system is put at an ideal place facing the south and being shiny for a whole day to a case where the solar battery system is put in the shade in rainy weather is generally about 1/20. In order to make outputs of electric energy per one day in case of the two cases the same, output of the solar battery system put in the shade in rainy weather is needed to be about 8 times as compared with solar battery system put at an ideal place facing the south and being shiny for a whole day, which makes a solar battery system large-sized and high-priced, which comes into main cause of hindrance to diffusion of the solar battery system.

Speaking of theoretical values, if output of electric energy per one day is 10 Wh/day, the output in case of the solar battery system being put at an ideal place facing the south =10 Wh/3h(the average of the duration of sunshine per one day) =3.3 W, while the output in case of the solar battery system being put in the shade in rainy weather = { 10 Wh/8h(charging time in the daytime)} × 20(damping correction coefficient in the shade in rainy weather)=25 W. Accordingly, a solar battery system of large-size and large-output is needed.

Further, in a solar battery system which includes combination of a storage battery having capacity of electric energy of one day and a solar battery in which the needed output for charging of the storage battery is secured even in the shade in rainy weather is secured, the operation of the solar battery system in the shade in rainy weather is assured. However, although the solar battery system is put at a place facing the south and is large-sized, a storage battery is fully charged soon with electric energy of one day, and charging time is short, after charging, surplus output of the solar battery is left so that the surplus output is released as useless energy. Therefore such a solar battery system is uneconomical.

Even if capacity of storage battery is increased to increase quantity of charged electric energy as the release of valuable charged energy is wasteful, the output of discharged electricity is set at a constant output which secures the operation of charge and discharge in case of the shade in rainy weather. Even if weather or a place where the solar battery is set is changed, the output of discharged power is the same, cannot be increased. As a result, the solar battery system is that is uneconomical and has only simple function.

However, although a conventional solar battery system has an effective face, the conventional battery system needs a wide area for the installation thereof and large-sized and high-priced, therefore uneconomical. Further, the control of output of a conventional solar battery system was done simply for a constant supply of electric power simply determined to a load or loads, and merely for an intermittent constant supply of electric power to a load or loads. A state where the output of the solar battery system is done,a state where a storage battery is charged with electricity and quantity of electric power needed by a load or loads were not considered and the control of charge and discharge having high value added was not necessarily done.

### SUMMARY OF THE INVENTION

The present invention is characterized in that the present invention is made considering the above-mentioned problems, and that although charge quantity charged to a storage battery changes according to the output of a solar battery changing depending on a state of solar radiation at the place of the installation of the solar battery, the output discharge quantity is automatically controlled in accordance with the charge quantity changing so that the effective and wise control operation of charge and discharge is made for efficient utilization of solar energy without waste.

Namely, the occupied area by the solar battery system to the number of solar battery panels is lessened, the needed quantity of electric power in case of the solar battery being put in the shade in rainy weather is secured. Further, the solar battery system has the function that in case of the solar battery being put at a sunny place facing the south, making use of valuable large quantity of output generated by a large capacity solar battery, large quantity of electric power is charged and stored into a storage battery, and the supply of larger quantity of electric power into a load or loads can be automatically done at self-decision.

Further, it is one object of the present invention to provide a solar battery system which has long-term data on charge and discharge stored into a memory so that the solar battery system has high and wise intelligence with the long-term assurance on stable operation and realibility-maintaining function, and maintenance function in accordance with self-learning and self-diagnostic based on the data base stored into the memory, and which can be used economically and without anxiety.

In order to attain the above-mentioned object, a solar battery system as claimed in claim 1 according to the present invention is a solar battery system in which electric energy of from a solar battery is charged and stored into a storage battery and the charged electric energy is supplied to a load or loads, wherein the solar battery system comprises a charge quantity detecting means for detecting the input charge quantity inputted into the storage battery and a discharge quantity control means for controlling the output discharge quantity to the load or loads in accordance with the information on the detected charge quantity obtained from the charge quantity detecting means.

In such a way, since in the solar battery system including combination of solar battery and storage battery, output discharge quantity to a load or loads is controlled in accordance with input charge quantity inputted into the storage battery, the needed electric energy of load in the case where the solar battery is installed in the shade in rainy weather can be assured, further the solar battery system has the function that in the case where the solar battery is installed at a sunny place facing south, making the best use of a large quantity of valuable output obtained from large capacity solar battery, a large quantity of electric energy is charged and stored into the storage battery so that the supply of larger electric energy of load can be made automatically at self-decision. Accordingly, economic and effective solar battery system can be realized.

A solar battery system as claimed in claim 2 is a solar battery system in which electric energy of from a solar battery is charged and stored into a storage battery and the charged electric energy is supplied to a load or loads, wherein the solar battery system comprises a charge quantity detecting means for detecting the input charge quantity inputted into the storage battery, a discharge quantity detecting means for detecting the output discharge quantity supplied to the load or loads, of electric energy charged into the storage battery, a storage means in which long-term data on charge and discharge quantity of the storage battery detected by the charge quantity detecting means and the discharge quantity detecting means and a discharge quantity control means for controlling the output discharge quantity to the load or loads in accordance with data on charge and discharge quantity stored into the storage means.

In such a way, the above-mentioned respective means are taken in such a manner that installed solar battery can be operated stably and securely every day, over a long period of time. Further, more effective discharge quantity control can be made by accumulating data on charge and discharge quantity of the storage battery itself over a long period of time, by having the functions of self-leaning and self-diagnostic and by making efficient use of the result of self-leaning or self-diagnostic for fine adjustment of the discharge quantity control means of the storage battery itself.

Further, collected data on charge and discharge quantity can be used as valuable data of maintenance, quality control, and valuable area data such as data on installed place of the solar battery system and a state of weather for the next development of product, and can be utilized to obtain higher reliability and make good control.

A solar battery system as claimed in claim 3 is a solar battery system in which electric energy of from a solar battery is charged and stored into a storage battery and the charged electric energy is supplied to a load or loads, wherein either the solar battery system comprises either a charge quantity detecting means for detecting the input charge quantity inputted into the storage battery and a discharge quantity control means for controlling the output discharge quantity to the load or loads in accordance with the information on the detected charge quantity obtained from the charge quantity detecting means, or a charge quantity detecting means for detecting the input charge quantity inputted into the storage battery, a discharge quantity detecting means for detecting the output discharge quantity supplied to the load or loads, of electric energy charged into the storage battery, a storage means in which long-term data on charge and discharge quantity of the storage battery detected by the charge quantity detecting means and the discharge quantity detecting means and a discharge quantity control means for controlling the output discharge quantity to the load or loads in accordance with data on charge and discharge quantity stored into the storage means, and wherein the charge quantity detecting means is a charging voltage detecting means for detecting the charging voltage of the storage battery.

As means for detecting charge and discharge electric energy, for example, when an electric double layers condenser is used for the storage battery. Namely, electric energy of condenser is defined by the following equation:$\text{W · S=CV2/2}$ wherein W·S is charge electric energy, C is electrostatic capacity, V is terminal voltage. The charge electric energy can be detected by determining terminal voltage of the electric double layers condenser.

As a one example, if C = 100 [V] , V = 3 [V] , $\text{W · S = CV2/2= 450 [W · sec] =0.125 [W · h]}$ . Namely, it is thought that electric power of 450 Watt can be charged and held for a second, or electric power of 0.125 Watt can be charged and held for one hour.

A solar battery system as claimed in claim 4 is a solar battery system in which electric energy of from a solar battery is charged and stored into a storage battery and the charged electric energy is supplied to a load or loads, wherein either the solar battery system comprises either a charge quantity detecting means for detecting the input charge quantity inputted into the storage battery and a discharge quantity control means for controlling the output discharge quantity to the load or loads in accordance with the information on the detected charge quantity obtained from the charge quantity detecting means, or a charge quantity detecting means for detecting the input charge quantity inputted into the storage battery, a discharge quantity detecting means for detecting the output discharge quantity supplied to the load or loads, of electric energy charged into the storage battery, a storage means in which long-term data on charge and discharge quantity of the storage battery detected by the charge quantity detecting means and the discharge quantity detecting means and a discharge quantity control means for controlling the output discharge quantity to the load or loads in accordance with data on charge and discharge quantity stored into the storage means, and wherein the charge quantity detecting means is a charging voltage detecting means for detecting the charging voltage of the storage battery, and wherein the charge quantity detecting means is an accumulated charged electric energy detecting means for detecting the accumulated charged electric energy charged into the storage battery.

A solar battery system as claimed in claim 5 is a solar battery system in which electric energy of from a solar battery is charged and stored into a storage battery and the charged electric energy is supplied to a load or loads, wherein either the solar battery system comprises either a charge quantity detecting means for detecting the input charge quantity inputted into the storage battery and a discharge quantity control means for controlling the output discharge quantity to the load or loads in accordance with the information on the detected charge quantity obtained from the charge quantity detecting means, or a charge quantity detecting means for detecting the input charge quantity inputted into the storage battery, a discharge quantity detecting means for detecting the output discharge quantity supplied to the load or loads, of electric energy charged into the storage battery, a storage means in which long-term data on charge and discharge quantity of the storage battery detected by the charge quantity detecting means and the discharge quantity detecting means and a discharge quantity control means for controlling the output discharge quantity to the load or loads in accordance with data on charge and discharge quantity stored into the storage means, and wherein the charge quantity detecting means is a charging voltage detecting means for detecting the charging voltage of the storage battery, and wherein the charge quantity detecting means is a monitoring condenser charging voltage detecting means for detecting the charging voltage of a monitoring condenser connected in parallel with the storage battery.

In such a way, the charge quantity detecting means for detecting the input charge quantity inputted into the storage battery can be formed simply of means for detecting the accumulated charged electric energy charged into the storage battery or means for detecting the charging voltage of a monitoring condenser connected in parallel with the storage battery.

Further, by controlling the charge and discharge quantity in accordance with the charge quantity, control of power supply which take the desired power corresponding to sorts of loads into consideration can be made possible, by which the needed power quantity of loads can be assured in the case where the solar battery is installed in the shade in rainy weather. Further, in the case where the solar battery is installed in a sunny place facing south, making the best use of a large quantity of valuable output obtained from large capacity solar battery, a large quantity of electric energy is charged and stored into the storage battery so that the supply of larger electric energy to load can be made automatically at self-decision. Accordingly, economic and effective solar battery system can be realized.

A solar battery system as claimed in claim 6 is a solar battery system as claimed in any of claims 1 through 5, wherein the discharge quantity control means of the solar battery system controls the output discharge quantity to the load or loads by the pulse width modulation control, the time control, the output voltage control or the output current control of the output to the load or loads.

Accordingly, appropriate optional method selected from among the pulse width modulation control, the time (intermittent) control, the output voltage control or the output current control of the output to the load or loads can be used in accordance with sorts of loads.

A solar battery system as claimed in claim 7 is a solar battery system in which electric energy of from a solar battery is charged and stored into a storage battery and the charged electric energy is supplied to a load or loads, wherein the solar battery system comprises a charge quantity detecting means for detecting the input charge quantity inputted into the storage battery, a discharge quantity detecting means for detecting the output discharge quantity supplied to the load or loads, of electric energy charged into the storage battery, a storage means in which long-term data on charge and discharge quantity of the storage battery detected by the charge quantity detecting means and the discharge quantity detecting means, a discharge quantity control means for controlling the output discharge quantity to the load or loads in accordance with data on charge and discharge quantity stored into the storage means, and an output means for outputting the information on maintenance or alarm in accordance with data on charge and discharge quantity stored in the storage means.

Accordingly, data of the present command signal of all sorts of control elements and long-term recording data on charge and discharge based on the past control are stored in order of time into the storage means and outputted from the stored means to a display means or to an external device and displayed. Further, long-term stable assurance of operation and a function of keeping of relalbility and a function of maintenance are given based on data memory so that informance on maintenance, the time of exchange, alarm and indication of bad causes can be outputted.

A solar battery system as claimed in claim 8 is a solar battery system claimed in any of claims 1 through 7, wherein the solar battery is composed of a plurality of solar battery panels put perpendicularly to the surface of land on a product.

Accordingly, since the solar battery is composed of a plurality of solar battery panels put perpendicularly to the surface of land on a product, a occupied space needed for installment of solar battery panels to the number thereof can be made small, in which generated energy of the solar battery panels and charge quantity of storage battery can be sufficiently secured and the solar battery can be protected from being damaged by droppings and snow.

As above-mentioned, since in the solar battery system of the present invention includes combination of solar battery and storage battery, and output discharge quantity to a load or loads is controlled in accordance with input charge quantity inputted into the storage battery, the needed electric energy of load in the case where the solar battery is installed in the shade in rainy weather can be assured Further, the solar battery system has the function that in the case where the solar battery is installed in a sunny place facing south, making the best use of a large quantity of valuable output obtained from large capacity solar battery, a large quantity of electric energy is charged and stored into the storage battery so that the supply of larger electric energy to load can be made automatically at self-decision. Accordingly, economic and effective solar battery system can be realized.

Further, data of the present command signal of all sorts of control elements sent and long-term recording data on charge and discharge based on the past control are stored in order of time into the storage means and are outputted from the storage means to a display means or to an external device and displayed. Further, long-term stable assurance of operation and a function of keeping of relalbility and a function of maintenance are given based on data memory so that informance on maintenance, the time of exchange, alarm and indication of bad causes can be outputted.

Further, since the solar battery is composed of a plurality of solar battery panels put perpendicularly to the surface of land on a product, a occupied space needed for installment of solar battery panels to the number thereof can be made small, in which generated energy of the solar battery panels and charge quantity of storage battery can be sufficiently secured and the solar battery can be protected from being damaged by droppings and snow.

### BRIEF DESCRIPTION OF THE DRAWINGS

Fig. 1 is a view for illustrating the basic structure of solar battery system according to the present invention.
Fig. 2 is a view for illustrating an example of a way of control of a control unit for controlling discharge quantity of the solar battery system according to the present invention.
Fig. 3 is an example of a field of application of the solar battery according to the present invention.

### DETAILED DESCRIPTION OF THE PREFERRED EMBODIMENTS

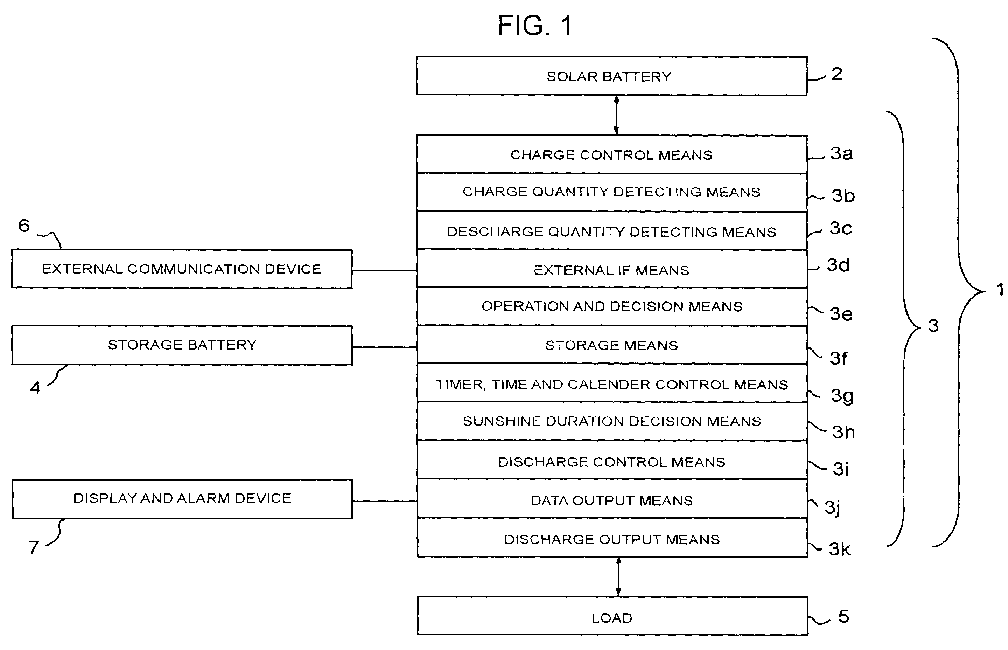

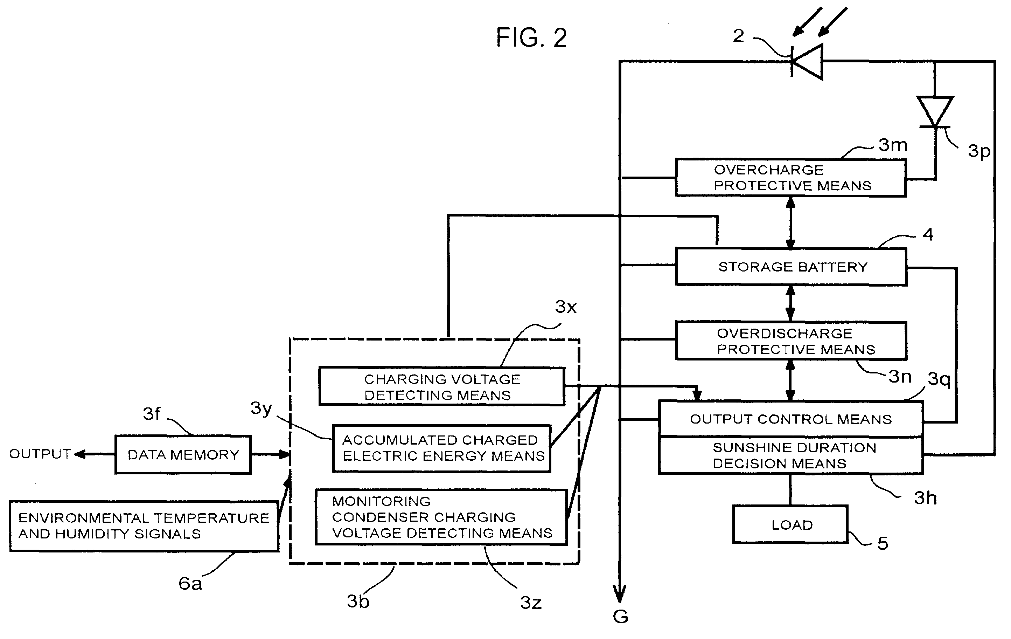

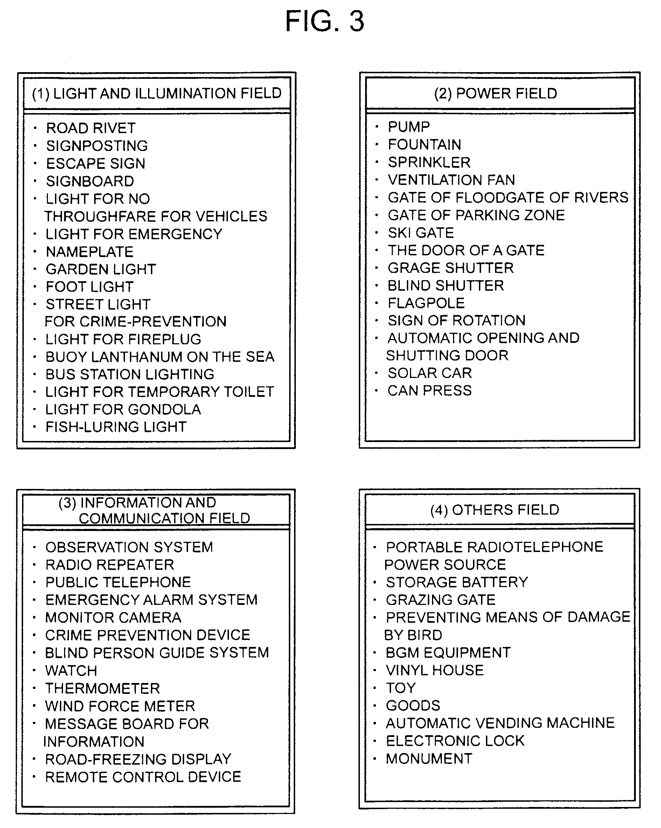

Referring to the drawings, an embodiment of the solar battery system according to the present invention is concretely explained. Fig. 1 is a view for illustrating the basic structure of solar battery system according to the present invention. Fig. 2 is a view for illustrating an example of a way of control of a control unit for controlling discharge quantity of the solar battery system according to the present invention. Fig. 3 is an example of a field of application of the solar battery according to the present invention.

In Fig. 1, a solar battery system 1 is comprised of solar battery 2 composed of a plurality of solar battery panels, a discharge quantity control device 3 as a discharge quantity control means including a charge quantity detecting means 3b and for controlling output discharge quantity to a load 5 in accordance with the charge quantity detection information sent from the charge quantity detecting means 3b, a storage battery 4, an external sensor and communication device 6, and a display and alarm device 7 as an output means for outputting the maintenance information or alarm according to the data on charge and discharge quantity stored in a storage means 3f of the discharge quantity control device 3, wherein the discharge quantity control device 3 supplies electric power to the load 5.

Hereupon, a plurality of solar battery panels of the solar battery 2 are mounted, perpendicularly to the surface of land, on the side of a product so that the occupied area needed for installing the solar battery 2 can make small, and the solar battery 2 can be protected from being damaged by droppings and snow.

The discharge quantity control device 3 is comprised of a charge control means 3a, the charge quantity detecting means 3b for detecting the charge quantity inputted into the storage battery 4, a discharge quantity detecting means 3c, an external interface means (hereinafter referred to as "external IF means") 3d, an operation and decision means 3e, the storage means 3f into which the long-term data on charge and discharge quantity of the storage battery 4 detected by the charge quantity detecting means 3b and the discharge quantity detecting means 3c is stored, a timer, time and calendar control means 3g, a sunshine duration decision means 3h, a discharge control means 3i, a data output **means 3j, and a discharge output means 3k.

In such a way, according to the present invention, electric energy sent from the solar battery 2 is stored in the storage battery 4, and the stored electric energy is supplied to the load 5, wherein discharge quantity of output is controlled according to the charge quantity of the storage battery 4 by various means of the discharge means 3, and at the same time the assurance on the most suitable operation and the maintenance of realiability are made based on the output sent from the external sensor and communication device 6 and the content of various data memory and a state of operation is displayed in a display and alarm device 7, and wherein the external sensor communication device 6 includes a sensor for detecting an environmental temperature and humidity and a communication device for sending an external signal and others.

Then, the function of several parts of the discharge quantity control device 3 in the solar battery system 1 shown in Fig. 1 is explained. The charge control means 3a has the function for making smooth charge, for example, such as the restriction on charged electric current and the prevention of overcharge in the case where output of the solar battery 2 is charged with the output of the solar battery 2.

The charge quantity detecting means 3b is composed, for example, of a charging voltatge detecting means for detecting the charging voltage of the storage battery 4 through the resistance of voltage divider, an accumulated charged electric energy detecting means for detecting the accumulated charged electric energy in the storage battery 4, and a monitoring condenser charging voltage detecting means for detecting the charging voltage of a monitoring condenser, wherein the charge quantity detecting means 3b is a means for detecting how much the storage battery is charged.

The discharge quantity detecting means 3c is a means for detecting the discharged quantity of the storage battery 4 and for detecting how much electric energy is supplied to the load 5. The external IF means 3d is a means for level-adjusting detected analog signal and the under-mentioned output of the external sensor and communication device 6 to convert the detected analog signal and the output of the external sensor and communication device into digital signal and for supplying the converted signal and output to a next stage operation and decision means 3e.

The operation and decision means 3e is comprised of a microcomputer, and a signal processing means for controlling all the discharge quantity control device 3, wherein the detection signal of the above-mentioned detecting means, and the decision signal of the sunshine duration decision means 3h and external signal are inputted into the operation and decision means 3e, while control signal digital-processed together with various command signal of the storage means 3f is outputted to the discharge quantity control means 3i.

Further, the output of the operation and decision means 3e is stored to the storage means 3f with being adapted to the date and time signals of the timer, time and calendar control means 3g.

The storage means 3f can be composed of various memory. However, it is preferably an exchangeable memory such as a memory card and MO(magnet-optic disc) so that individual control is possible in accordance with sorts of the load 5.

Then, data of the present command signal of all sorts of control elements and data including the result of control based on the past control stored in order of time into the stored means 3f are outputted from the storage means 3f to a display means or to an external device and displayed. Further, information on maintenance, the time of exchange, alarm and indication of portions of bad causes can be outputted by a self-learning and self-diagnostic functional device based on the data obtained from a data memory.

The sunshine duration decision means 3h is a means for deciding whether the weather is fine weather, or in a state of the shade such as rainy weather or cloudy weather, or whether the present time is in the night in which any sun shine is not found, wherein output voltage or output current of the solar battery 2 is detected and from the result of detection, the state of weather can be decided.

The discharge control means 3i controls the next stage discharge output means 3k by command signal as controls signal sent from the microcomputer of the operation and decision means 3e. The discharge output means 3k is composed of a power transistor and others, which supplies the needed electric power to the load 5 in accordance with the control signal.

The solar battery system 1 formed in such a manner is applied to the load of a various fields including (1) light and illumination field, (2) power field, (3) information and communication field and (4) other field classified roughly in a table as shown in Fig.3. Accordingly the charge and discharge control adapted for the operation characteristic of the load 5 is needed.

For example, in the light and illumination field, in particular, in the load 5 such as a signal and others used outside, as the surrounding is light in open daylight of fine weather, illumination is made light, and in case of rainy weather or cloudy weather and in the night illumination can be decreased than in the daytime. Therefore, the loads 5 can be accommodated to illumination by adjusting number of the loads 5 and supplied electric power by controlling output discharge quantity according to the accumulated quantity of electricity.

Further, in the power field, because there are many the load 5 in which the constant continuous power is required as operation is started, in the case where the solar battery is mounted in the shade in rainy weather, the needed quantity of loaded electric power is supplied only to the load 5 needed at the minimum by controlling output discharge quantity according to the accumulated quantity of electricity.

Further, in the case where the solar battery is mounted at a sunny place facing the south, a large quantity of output is charged and stored by making the best use of large output sent specially from the large storage solar battery system 1. Therefore, the load 5 can be accommodated to the request of the constant continuous power by supplying large quantity of electric power to a larger number of the loads 5.

The outline of operation of the solar battery system 1 shown in Fig. 1 is explained. The output of the solar battery 2 is smoothly charged to the storage battery 4 while the restriction on charging current and the prevention of overcharge are made by the charge control means 3a.

In this time, the charge quantity detecting means 3b, which is composed, for example, of the charging voltage detecting means for detecting the charging voltage of the storage battery 4 through the resistance of voltage divider, the accumulated charged electric energy detecting means for detecting the accumulated charged electric energy of the storage battery 4, or the monitoring condenser charging voltage detecting means connected in parallel with the storage battery 4, detects how much the storage battery 4 is charged.

Further, the discharge quantity detecting means 3c detects the discharging quantity of the storage battery 4 in order to detect how much quantity of electric power is supplied to the load 5. The detected analog signal and the under-mentioned output of the external sensor and communication device 6 are level-adjusted, converted into digital signals by the external IF means 3d, and then supplied to the next stage operation and decision means 3e.

The operation and decision means 3e is comprised of a microcomputer, and a signal processing means for controlling all the discharge quantity control device 3, wherein the detection signal of the above-mentioned detecting means, and the external signal are inputted into the operation and decision means 3e, while control signal and appropriate various command signal corresponding to the load of the storage means 3f are digital-processed, and outputted to the discharge control means 3i.

Further, the output of the operation and decision means 3e, which includes the present command signal of all sorts of control elements and the result of the past control, is stored in order of time into the storage means 3f according to the date and time signals of the timer, time and calendar control means 3g.

Then, the command signal sent from the microcomputer of the operation and decision means 3e is inputted into the discharge control means 3i. Further, the sunshine duration decision means 3h decides whether the weather is fine weather, or in a state of the shade such as rainy weather or cloudy weather, or whether the present time is in the night in which any sun shine is not found, for example by magnitudes of output voltage or output current of the solar battery 2, and signal of the result of decision is inputted to the discharge control means 3i.

The control signal of the discharge control means 3i, which controls the output discharge quantity outputted to the output 5 in accordance with the charged quantity in the storage battery 4, controls the next discharge output means 3k. And, the discharge output means 3k composed of power transistor supplies the needed electric power to the load 5.

Then, referring to Fig.2, an example of a state of control in the discharge quantity control device 3 of the solar battery system 1 according to the present invention is explained. As in fig. 2, like marks designates the same parts as in Fig.1. explanation about them is omitted.

"3p" designates a Shotky barrier diode for prevention of reverse current, "3m" designates an overcharge protective means, "3n" designates an overdischarge protective means, "3q" designates an output control means, "3x" designates a charging voltage detecting means, "3y" is an accumulated charged electric energy detecting means, and "3z" is a monitoring condenser charging voltage detecting means, wherein the charging voltage detecting means 3x, and the accumulated charged electric energy detecting means 3y and the monitoring condenser charging voltage detecting means 3z form the charge quantity detecting means 3b. "6a" designates an environmental temperature and humidity signals.

The charge control means 3a charges the storage battery 4 with electric energy generated in the solar battery 2, through a Shotky barrier diode 3p for prevention of reverse current and an overcharge protective means 3m. Electric power is supplied from the storage battery 4 to the load 5 through the overdischarge protection means 3n and the output control means 3q comprised of the discharge control means 3i and the discharge output means 3k, wherein the supply of electric power to the load 5 is controlled by the output control means 3q.

Detection signals of any of the charging voltage detecting means 3x for detecting the charging voltage of the storage battery 4, the accumulated charged electric energy detecting means 3y for detecting the accumulated electric energy, or the monitoring charging voltage detecting means 3z for monitoring and detecting the charging voltage is inputted into the discharge control means 3i of the output control means 3q.

Further, the sunshine duration decision means 3h decides whether the weather is fine weather, or in a state of the shade such as rainy weather or cloudy weather, or whether the present time is in the night in which any sun shine is not found, for example by magnitudes of output voltage or output current of the solar battery 2 and signal corresponding to the result of decision is inputted to the discharge control means 3i of the output control means 3q.

Then, in fine weather, making use of large quantity of electric energy, output discharge quantity is not kept at a constant output set by the operation assurance of charge and discharge in rainy weather or in a state of the shade, but the control of output to the load 5 is made in such a manner that large quantity of electric energy is supplied to a large number of the loads 5.

In a state of the shade such as rainy weather or cloudy weather, the restriction on the assurance of operation of charge and discharge is set for the output of the output control means 3q, wherein the output control to the load 5 is made considering charged quantity in the storage battery 4 together with conventional control system.

Command signal sent from the storage means 3f in which various command signals of control elements and environmental temperature and humidity signals 6a of the external sensor and communication device 6 are inputted to the charge quantity detecting means 3b and used as control elements. The present command signal of all sorts of control elements and the result of control based on the past control stored in order of time into the storage means 3f are outputted to a display means or an external device to be displayed on the display means or the external device.

Further, informations on maintenance, the time of exchange, alarm and indication of portions of bad causes can be outputted by a self-learning and self-diagnostic function based on the data of a data memory provided in the storage means 3f.

As the method of discharge quantity control made by the output control method 3q, appropriate arbitrary methods can be applied which are selected from among pulse width moduration (PMW) control, time (intermittent) control, output voltage control, output current control and others in accordance with orts of the loads 5.

## Claims

1. A solar battery system in which electric energy of from a solar battery is charged and stored into a storage battery and the charged electric energy is supplied to a load or loads, characterized in that the solar battery system comprises a charge quantity detecting means for detecting the input charge quantity inputted into the storage battery and a discharge quantity control means for controlling the output discharge quantity to the load or loads in accordance with the information on the detected charge quantity obtained from the charge quantity detecting means.

2. A solar battery system in which electric energy of from a solar battery is charged and stored into a storage battery and the charged electric energy is supplied to a load or loads, characterized in that the solar battery system comprises a charge quantity detecting means for detecting the input charge quantity inputted into the storage battery, a discharge quantity detecting means for detecting the output discharge quantity supplied to the load or loads, of electric energy charged into the storage battery, a storage means in which long-term data on charge and discharge quantity of the storage battery detected by the charge quantity detecting means and the discharge quantity detecting means and a discharge quantity control means for controlling the output discharge quantity to the load or loads in accordance with data on charge and discharge quantity stored into the storage means.

3. A solar battery system as claimed in claim 1 or claim 2, wherein the charge quantity detecting means is a charging voltage detecting means for detecting the charging voltage of the storage battery.

4. A solar battery system as claimed in claim 1 or claim 2, wherein the charge quantity detecting means is an accumulated charged electric energy detecting means for detecting the accumulated charged electric energy charged into the storage battery.

5. A solar battery system as claimed in claim 1 or claim 2, wherein the charge quantity detecting means is a monitoring condenser charging voltage detecting means for detecting the charging voltage of a monitoring condenser connected in parallel with the storage battery.

6. A solar battery system as claimed in any of claims 1 through 5, wherein the discharge quantity control means controls the output discharge quantity to the load or loads by the pulse width modulation control, the time control, the output voltage control or the output current control of the output to the load or loads.

7. A solar battery system as claimed in claim 2, wherein the solar battery system further comprises an output means for outputting the information on maintenance or alarm in accordance with data on charge and discharge quantity stored in the storage means.

8. A solar battery system as claimed in any of claims 1 through 7, wherein the solar battery is composed of a plurality of solar battery panels put perpendicularly to the surface of land on a product.
